# EUROPÄISCHE PATENTSCHRIFT

(11) **EP 2 982 524 B1**
(45) Veröffentlichungstag und Bekanntmachung des Hinweises auf die Patenterteilung: **23.05.2018**
(21) Anmeldenummer: 15176998.1
(22) Anmeldetag: 16.07.2015
(51) Int. Cl.: B60C 23/04

(54) **UNIVERSELLER REIFENDRUCKSENSOR**
UNIVERSAL TIRE PRESSURE SENSOR
CAPTEUR DE PRESSION DE PNEU UNIVERSEL

(30) Priorität: 08.08.2014 DE 102014111326; 21.08.2014 DE 102014111968
(43) Veröffentlichungstag der Anmeldung: 10.02.2016
(73) Patentinhaber: Huf Hülsbeck & Fürst GmbH & Co. KG, 42551 Velbert (DE)
(72) Erfinder: WAGNER, Markus, 71638 Ludwigsburg (DE); MÜLLER, Benjamin, 76185 Karlsruhe (DE)
(74) Vertreter: Zenz Patentanwälte Partnerschaft mbB

(56) Entgegenhaltungen:
- US-A1- 2002 075 145
- US-A1- 2013 226 403
- US-A1- 2014 172 342
- Binwen Huang: "Design of Direct-Type Tire-Pressure Monitoring System Based on SP37 Sensor", Sensors & Transducers, 1 December 2013 (2013-12-01), pages 74-79, XP055360476, Toronto Retrieved from the Internet: URL:http://www.sensorsportal.com/HTML/DIGE ST/december_2013/PDF_vol_160/P_1580.pdf [retrieved on 2017-03-30]

## Beschreibung

Die Erfindung betrifft einen universellen Reifendrucksensor. Insbesondere betrifft die Erfindung einen Reifendrucksensor, der in einfacher Weise zur Kommunikation mit einer Vielzahl von fahrzeugseitigen Reifendruckkontrollsystemen (TPMS) konfigurierbar ist.

Automatische Reifendruckkontrollsysteme sind im Stand der Technik bekannt. Der Einsatz solcher Systeme unterstützt Fahrer dabei, immer mit dem korrekten Reifenfülldruck zu fahren, da der Fahrer bei Abweichung vom richtigen Druck durch eine entsprechende Warnmeldung im Fahrgastraum informiert wird. Der richtige Reifendruck hat sowohl Einfluss auf die Sicherheit, die optimale Fahrdynamik und auch den Fahrkomfort.

Sogenannte direkte Reifendruckkontrollsysteme arbeiten besonders präzise. Dabei erfassen Reifendrucksensoren an jedem Rad den Reifendruck und ggf. weitere Reifeninformationen, z.B. die Temperatur. Diese Informationen werden zusammen mit einer Kennung des Reifendrucksensors per Funksignal an ein Steuergerät im Fahrzeug gesendet. Beispielsweise kann eine solche Datenübertragung im Bereich von 434 MHz oder 315 MHz (hochfrequente Kommunikation oder HF-Kommunikation) erfolgen.

Eine Kommunikation von der fahrzeugseitigen Steuereinheit mit den Reifendrucksensoren erfolgt bei sogenannten getriggerten Systemen nach Aussenden eines Abfragesignals durch das Steuergerät, diese Anforderung kann im niederfrequenten Bereich (z.B. 125 kHz) erfolgen. Aufgrund der niedrigen Frequenz ist die Reichweite eines niederfrequenten Signals, beispielsweise eines Bereiches um 125 kHz gering. Mit geeigneter Dimensionierung kann ein solcher steuergerätseitiger Triggersender so ausgelegt werden, dass die Reichweite nur wenige Meter beträgt, so dass nur die Reifen am eigenen Fahrzeug angesprochen werden. Es gibt sowohl Systeme mit mehreren Triggersendern als auch mit einem einzigen Triggersender.

Auf den Trigger antwortet der Reifendrucksensor, wie oben erwähnt, drahtlos, z.B. mit einem Datenprotokoll im Hochfrequenzbereich.

Auch Systeme die gänzlich ohne Trigger auskommen und die Daten in Abhängigkeit von Situationsveränderungen von den Reifensensoren übermitteln sind bekannt und üblich.

Ein Verfahren und System zur drahtlosen Reifendrucküberwachung ist beispielsweise aus der EP 2 280 837 B1 bekannt.

Ein anderes Überwachungsverfahren ist in der WO 2013/022435 beschrieben.

Die Druckschrift US 2013/226403 A1 beschreibt einen Reifendrucksensor der eine Speichereinheit umfasst, in der verschiedene Verschlüsselungsverfahren gespeichert sind. Durch ein Auswahlmodul wird ein passendes Verschlüsselungsverfahren ausgewählt, das zur Verarbeitung von Messdaten benutzt wird. Die Druckschrift US 2005/0104722 A1 schreibt einen sogenannten universellen Reifendrucksensor gemäß dem Oberbegriff des Patentanspruches 1.

Der US 2002/0075145 A1 ist ein elektronisches Reifendruckkontrollsystem zu entnehmen. Das Reifendruckkontrollsystem misst Reifendaten und übermittelt diese Daten, beispielsweise auf Anfrage oder automatisch, an einen Empfänger.

Der US 2014/0172342 A1 ist ein weiteres Verfahren zur Einstellung eines Reifendrucksensors zu entnehmen.

Reifendrucksensoren enthalten irgendeine Art von Energiequelle oder Energiespeicher, beispielsweise eine Batterie oder einen Piezo-Generator. Außerdem sind ein Drucksensor und optional ein Temperatursensor vorgesehen, welche mit einem Mikrocontroller gekoppelt sind. Die üblichen Reifendrucksensoren weisen dabei eine Hochfrequenz-Sendeeinheit mit einer zugehörigen Antenne und eine Niederfrequenz-Empfangseinheit mit einer zugehörigen Spule auf. Allerdings können auch Systeme mit ausschließlich hochfrequenter Empfangs-/Sendetechnik realisiert werden. Ggf. sind auch noch Beschleunigungssensoren und Schwingquarze in dem Sensoraufbau vorgesehen. Zahlreiche der Komponenten können zu einer standardisierten integrierten Schaltung, einer sogenannten Sensor-IC integriert sein.

Trotz der Einheitlichkeit der Komponenten eines Reifendrucksensors sind herstellerabhängig die Sensoren hinsichtlich der Aussendung von den erfassten Daten und sonstigen Kenndaten auf die Fahrzeugsysteme anzupassen. Beispielsweise haben unterschiedliche Fahrzeughersteller unterschiedliche Anforderungen hinsichtlich Trägerfrequenz, Modulation des Signals, Datenformaten oder Verschlüsselungstechniken der Signale.

In jüngerer Zeit wird versucht, mit einheitlichen Sensoren eine Vielzahl von Fahrzeugen abzudecken. Für derartige Systeme hat sich der Begriff Universalsensor (universal tire pressure sensor) etabliert. Regelmäßig wird hierbei zwischen programmierbaren Universalsensoren, mehrsprachigen (multiprotocol) Universalsensoren und konfigurierbaren Universalsensoren unterschieden.

Ein programmierbarer Universalsensor erhält durch eine umfassende meist drahtlos übertragene Programmierung, die einige 10 Sekunden bis zu einigen Minuten in Anspruch nehmen kann, eine vollständige, fahrzeugspezifische Programmierung. Die Dauer dieser Programmierung und die Anfälligkeit für Fehlübertragungen macht ein solches System angesichts der Vielzahl an zu montierenden Reifen in einer Werkstatt zu einem System mit geringer Akzeptanz.

Die sogenannten mehrsprachigen Universalsensoren sind im Gegensatz zum programmierbaren Universalsensor bereits fertig programmiert, so dass der umfassende Programmiervorgang entfällt. Allerdings passen die spezifischen Sendeprotokolle und sonstigen Sensorparameter für verschiedene Fahrzeuge nicht sämtlich in den Speicher eines Reifendrucksensors. Daher wird mit jedem Sensor eine Teilgruppe von Fahrzeugen abgedeckt, wobei der Sensor in diesen verschiedenen Konfigurationen nacheinander seine erfassten Informationen aussendet. Das Steuergerät versteht nur einen Teil der gesendeten Informationen, nämlich die zu ihm passenden Informationen, der Rest wird verworfen. Es ergibt sich, dass nur ein Bruchteil der vom Sensor ausgesendeten Informationen tatsächlich auch der Nachrichtenübermittlung dient, so dass ein stark erhöhter Energieverbrauch anfällt und außerdem durch die zahlreichen unnützen Nachrichten Störungen der Kommunikationsumgebung hervorgerufen werden.

Eine Weiterentwicklung ist entsprechend ein sogenannter konfigurierbarer Universalsensor, der von Anfang an mit einer Vielzahl von Sendeprotokollen und Parametern programmiert ist, aber noch einige entscheidende Informationen benötigt, bevor er die Kommunikation mit der fahrzeugseitigen Einrichtung aufnehmen kann. Es wird also aus einem Satz gespeicherter Konfigurationen eine passende ausgewählt, gemäß derer der Betrieb anschließend ausgeführt wird. Nach erfolgreicher Konfiguration sendet der einmal konfigurierte Universalsensor anschließend auch nur noch das passende Protokoll. Die zur Konfiguration erforderlichen Informationen umfassen nur einige wenige Informationen, die übermittelte Datenmenge ist entsprechend um Größenordnungen kleiner als bei einer vollständigen Programmierung. Es wird dem Sensor lediglich mitgeteilt, welche seiner gespeicherten Konfigurationen er zur Kommunikation verwerten soll.

Alle genannten Systeme weisen Nachteile auf. Einerseits ist bei einem von der übrigen Umgebung getrennten System eines Reifendrucksensors auf möglichst geringen Energieverbrauch zu achten und andererseits auf eine rasche Programmierung bei möglichst umfassender Abdeckung von Fahrzeugen durch ein einziges Sensormodel. Es wäre erstrebenswert, einen wirklich universellen Sensor ausbilden zu können, der außerdem einen geringen Energieverbrauch aufweist.

Diese Aufgabe wird gelöst durch einen Universalsensor mit den Merkmalen des Patentanspruchs 1 sowie ein Verfahren mit den Merkmalen des Anspruchs 7.

Gemäß der Erfindung weist der Universalsensor einen eingebauten, und mit dem Mikrokontroller des Sensor-IC's verdrahteten zusätzlichen Speicher auf.

Soweit in dieser Anmeldung von Sensor-IC die Rede ist, ist damit eine intergierte Schaltung gemeint, welche einen Microcontroller, die Druckmessfunktion und ggf. Kommunikationsschnittstellen aufweist. Es können auch weitere Sensoren auf dem Sensor-IC integriert sein, insbesondere Temperatursensoren oder Beschleunigungssensoren. Empfangsspulen oder Sendeantennen können ebenfalls integriert sein oder getrennt von dem Sensor-IC ausgebildet sein. Eine Energieversorgung kann separat von dem Sensor-IC als Batteriespeicher oder auch als Generator, z.B. Piezo-Generator ausgebildet sein.

Der zusätzliche Speicher kann eine beliebige Art von dauerhaftem Speicher sein, z.B. ein Flash-Speicher (beispielhaft ein SPI[Serial Peripheral Interface] Flash-Speicher, z.B. von der Firma Micron).

Der zusätzliche Speicher ist zwar fest in dem Sensorgehäuse aufgenommen und verbleibt dort dauerhaft, er ist aber nur für die anfängliche Speicherung zahlreiche unterschiedlicher Herstellerkonfigurationen vorgesehen. Der Sensor bringt in diesem Zusatzspeicher sämtliche Informationen mit, die er für die Datenerfassung und Übermittlung gemäß Spezifikation unterschiedlicher Fahrzeughersteller benötigt. Es kann sich dabei um einzelne Parametersätze handeln, es kann sich jedoch auch um vollständige Programme oder Teilprogramme sowie alle anderen Arten von elektronisch speicherbaren Daten handeln.

In seinem Anfangszustand ist der Sensor in der Lage, auf den Zusatzspeicher zuzugreifen, der zusätzlich zu dem internen Speicher der Sensor-IC vorliegt. Der Sensor-IC verfügt dazu über eine Basis-Funktionalität, z.B. in Gestalt eines Bootloaders, welcher die Auswahlkennung von einem drahtlosen Kommunikationsgerät empfangen kann und die Kommunikation zum Umkopieren mit dem zusätzlichen Speicher abwickelt.

Dem Sensor werden beim Einbau am Fahrzeug Informationen übermittelt, welche ihm die Auswahl eines Konfigurationssatzes aus dem Zusatzspeicher ermöglichen. Beispielsweise wird eine numerische Kennung oder ein sonstiger Kennungssatz übermittelt. Dies kann auf die herkömmliche Weise geschehen, insbesondere mit einem drahtlosen System oder einer kurzzeitigen Kontaktierung. Als drahtlose Systeme sind sogenannte RDKS-Diagnosegeräte am Markt verfügbar und bekannt. Diese können verschiedene Kommandos im Niederfrequenzbereich senden. Die Datenübertragungsrate ist dabei eher gering, es ist jedoch nur ein kurzer Befehlssatz zu übermitteln, ähnlich wie bei einem konfigurierbaren Reifendrucksensor der oben bereits beschrieben wurde.

Die Verbindung des zusätzlichen Speichers mit der Sensor-IC ist erfindungsgemäß als serielle Schnittstelle ausgebildet.

Diese Gestaltung erlaubt eine äußerst kostengünstige und einfache Gestaltung. Es ist möglich, eine standardisierte oder am Markt vorgefertigte Sensor-IC zu verwenden, solange diese eine Ansteuerung der seriellen Schnittstelle erlaubt. Oft haben die Microcontroller der Sensor-ICs, welche am Markt verfügbar sind, eine freie Kontaktierung, welche die Nutzung als serielle Schnittstelle bei entsprechender Programmierung ermöglichen. Beispielsweise sind am Markt verfügbare Sensor-ICs wie die von der Firma freescale (z.B. FXTH87) einsetzbar.

Bei dieser Gestaltung mit einer seriellen Schnittstelle ist es nicht erforderlich eine aufwendige Schnittstelle oder sogar ein Bus-System zwischen Sensor-IC und zusätzlichem Speicher zu etablieren. Zwar ist die Datenübertragung zwischen Sensor-IC und zusätzlichem Speicher bei serieller Kommunikation vergleichsweise langsam, der Zugriff auf den zusätzlichen Speicher erfolgt jedoch nur einmalig, nämlich für den Vorgang des Umkopierens. Dabei ist die langsame Datenübertragung unerheblich, da die übertragene Datenmenge immer noch deutlich schneller übertragen wird als bei einer Programmierung über ein drahtloses Programmiergerät. Darüber hinaus läuft der Vorgang des Umkopierens gänzlich im Sensor selbst ab, ein Monteur kann nach antriggern des Konfigurationsvorgangs in seiner Montagearbeit weiter voranschreiten, während der Sensor intern den Speicher programmiert und anschließend den Zusatzspeicher deaktiviert.

Der zusätzliche Speicher wird gemäß seiner Funktion nicht als Erweiterungsspeicher eingesetzt, für den der Zugriff über eine serielle Schnittstelle zu langsam wäre. Da der zusätzliche Speicher nur ein Datencontainer ist, der nach Abgabe der gewünschten Information an die Sensor-IC bei Konfiguration nicht mehr (oder erst wieder nach geraumer Zeit) benötigt wird, ist die serielle Übertragung der Datenmengen akzeptabel.

Besonders vorteilhaft ist es, die serielle Schnittstelle aus einer einzigen elektrischen Leitung zu realisieren.

Die bitweise, serielle Übertragung ist mit minimalem baulichen Aufwand realisierbar, es genügt neben Versorgungsleitungen (Spannungsversorgung) eine einzige Datenleitung. Über diese Datenleitung wird die Anforderung des Speicherbereichs im zusätzlichen Speicher abgewickelt und es werden die angeforderten Speicherinhalte an die Sensor-IC zur Speicherung im internen Speicher der Sensor-IC übertragen. Selbst in dieser Gestaltung ist die Übertragung um Größenordnungen stabiler und schneller als eine vollständige drahtlose Programmierung des internen Speichers.

In einer Weiterbildung der Erfindung ist Der erfindungsgemäß vorgesehene zusätzliche Speicher unter Steuerung der Sensor-IC energetisch deaktivierbar oder in der Energieaufnahme reduzierbar, d.h. von der Energieversorgung zu trennen oder in der Energieaufnahme reduzierbar.

Es ist dabei erfindungsgemäß auch möglich, bereits konfigurierte Sensoren in ihrer Konfiguration zu ändern, beispielsweise bei einer Fehlkonfiguration oder aber einem Fahrzeugwechsel.

Der Betrieb eines solchen Zusatzspeichers ist nur vorgesehen, solange der Sensor noch nicht auf das Zielsystem konfiguriert ist. Als wesentlicher Unterschied zu einer Speichererweiterung ist vorgesehen, dass der Zusatzspeicher nach anfänglicher erster Programmierung abschaltbar ist. Es handelt sich also nicht um eine Speichererweiterung sondern einen temporär aktivierbaren Speicherbaustein. Es ist erfindungsgemäß vorgesehen, dass die vom Zusatzspeicher benötigten Informationen zur Konfiguration in dem internen Speicher der integrierten Schaltung (IC) des Sensors dauerhaft kopiert werden. Der interne Speicher des Sensors braucht nur so klein ausgebildet zu sein, dass er sicher die Daten und Programme für jede einzelne der möglichen Konfigurationen speichern kann (nicht jedoch verschiedene Konfigurationen gleichzeitig aufnehmen muss). Dadurch ist der Stromverbrauch im normalen Sensorbetrieb optimiert. Der Zusatzspeicher kann demgegenüber deutlich größer ausgebildet sein, da er nur kurzzeitig, nämlich bei der Konfiguration des Sensors energieversorgt ist. Nach erfolgreichem Umkopieren in den internen Speicher des Sensor-IC wird der Zusatzspeicher abgeschaltet, wobei die Abschaltung zumindest zeitweise erfolgt oder auch komplett dauerhaft.

Der so erstellte Sensor ist ein tatsächlicher Universalsensor, da er etliche Fahrzeugmodelle mit einem einzigen Sensor abdecken kann. Die Speicherknappheit wird weitgehend aufgehoben, dennoch wird das System in Betrieb nicht mehr Energie benötigen als ein herkömmlicher Reifendrucksensor, da der Mehrverbrauch an Energie nur für den Zeitraum der Konfiguration erforderlich ist und nach erfolgreichem Umkopieren der Zusatzspeicher abschaltbar ist. Der Zusatzspeicher kann dabei sowohl Übertragungsparameter als auch vollständige Applikationen aufnehmen. Der Zusatzspeicher kann, muss jedoch nicht, als getrenntes Bauelement von dem Sensor-IC ausgebildet sein und bei der Montage entsprechend einzeln zu bestücken sein. Dies erleichtert die Anpassung der Produktion neuer Sensoren für geänderte oder neue Fahrzeugsysteme.

Wesentlich ist, dass ein hinsichtlich der Strom-/Spannungsversorgung deaktivierbarer Zusatzspeicher mit erforderlichen Informationen ausgebildet und mit der Sensor-IC zeitweise koppelbar ist und dieser Speicher in dem Sensorgehäuse dauerhaft aufgenommen ist. Der Zusatzspeicher bleibt also tatsächlich Teil des Sensors, auch wenn er den wesentlichen Zeitraum der Lebensdauer des Sensors nicht aktiviert ist. Der wesentliche Vorteil dieses Universalsensors wird jedoch dadurch erreicht, dass der Sensor sämtliche Anpassungsfähigkeiten bereits mitbringt und nur noch eine Konfiguration hinsichtlich des gewünschten Zielsystems benötigt. Die eigentliche Programmierung der Sensor-IC läuft im Sensor selbst zwischen Zusatzspeicher und Sensor-IC ab und benötigt nur das Triggersignal zur Programmierung mit der entsprechenden Anweisung, welche Programmierung aus dem Zusatzspeicher in den Sensor-IC umzuspeichern ist. Da der Zusatzspeicher verdrahtet mit der Sensor-IC vorliegt, ist ein solcher Umspeichervorgang in äußerst geringer Zeit abgeschlossen, um Größenordnungen schneller als bei der Programmierung durch ein drahtloses Programmiergerät. Dieses System ist auch der Programmierung mit Hilfe von Kontaktstiften überlegen, da der Sensor keinerlei händische Manipulationen in Gestalt der Kopplung mit einer Programmiereinrichtung benötigt. Ein Monteur des entsprechenden Reifendrucksensors sendet lediglich ein Programmiersignal an den Sensor, dieses wird quittiert und intern im Sensor läuft der Umkopiervorgang. Nach erfolgreichem Umkopiervorgang kann ein Quittungssignal ausgegeben werden und anschließend kann der Sensor selbständig die Versorgung des Zusatzspeichers unterbrechen.

Es ist dabei bevorzugt, dass der Microcontroller dann in den energiesparenden Modus des zusätzlichen Speichers schaltet, nachdem ein ausgewähltes Datenpaket von dem zusätzlichen Speicher in den internen Speicher kopiert wurde. Die Versorgung des Zusatzspeichers kann jedoch auch alternativ erst auf ein Programmiersignal von außen hin unterbrochen werden. Das erfindungsgemäße Konzept verringert die Konfigurationszeiten erheblich. Die gesamte Konfigurationszeit beträgt weniger als einige Sekunden und die Übertragung der weiteren Daten über die internen Leiterbahnen erlaubt eine fehlerfreie und schnelle Übertragung.

Hinsichtlich der Dauerhaftigkeit der Unterbindung einer Spannungsversorgung des Zusatzspeichers sind zahlreiche Gestaltungen möglich. Beispielsweise kann der Sensor-IC den Zusatzspeicher tatsächlich nur kurzzeitig aktivieren, solange ein Programmiervorgang erfolgt. Der Sensor-IC kann jedoch auch diese Versorgung reaktivierbar halten, wobei der Sensor dann auch nach erstmaliger Konfiguration umprogrammierbar wäre, um ein anderes Konfigurationsschema aus dem Zusatzspeicher zu übernehmen. Dazu würde nach Empfang eines entsprechenden Signals durch dien Sensor-IC der Zusatzspeicher wieder aktiviert, also mit Spannung versorgt und ein anderer Programm- oder Datenbereich aus dem Zusatzspeicher in den Sensor-IC umkopiert.

Die Datenverbindung zwischen Sensor-IC und Zusatzspeicher kann für das Umkopieren verschlüsselt werden. Beispielsweise können dazu die Daten bereits verschlüsselt im Zusatzspeicher hinterlegt sein und der Sensor-IC verfügt über die Programmierung, die entsprechende Verschlüsselung beim Vorgang des Umkopierens aufzuheben, so entschlüsselte Informationen in den Sensor-IC umgespeichert werden.

Eine solche Verschlüsselung erschwert die unerlaubte Kopie eines Reifendrucksensors und die Manipulation der Programmierungen.

Die Daten im Zusatzspeicher können auch auf den jeweiligen konkreten Sensor hin verschlüsselt sein, so dass für jeden einzelnen Sensor ein anderer Schlüssel generiert ist. Dann kann der Zusatzspeicher nur mit dem zugehörigen, individuellen Sensor-IC verwendet werden. Dies erhöht weiter die Sicherheit bei einem derartigen sicherheitsrelevanten Konzept.

Es kann grundsätzlich auch vorgesehen sein, dass über der Sensor-IC auch der Zusatzspeicher beschreibbar ist. Dies bedeutet, dass ein Universalsensor der erfindungsgemäßen Art in einem dann ggf. länger andauernden Programmiervorgang mit einem neuen Inhalt für den Zusatzspeicher versorgt werden kann. Dies ist beispielsweise bei Updates oder bei Konfiguration auf weitere Fahrzeuge hilfreich. Da eine solche Umprogrammierung jedoch nicht unmittelbar bei der Montage stattfindet, sondern auf Herstellerseite, ist dieser Vorgang nicht so zeitkritisch und die Möglichkeit erhöht den Nutzwert eines derartigen Universalsensors weiter.

Es ist eine bevorzugte Gestaltung des Sensors, wenn die Spannungsversorgung des Zusatzspeichers komplett deaktivierbar oder reduzierbar ist.

Zwar wird bereits erheblich Energie eingespart, wenn erfindungsgemäß der Zugriff auf den zusätzlichen Speicherbaustein unterbunden wird, eine tatsächliche Abschaltung optimiert den Strombedarf der gesamten Einrichtung jedoch erheblich.

Die Erfindung wird nun anhand der beiliegenden Zeichnung näher erläutert.
Figur 1 zeigt schematisch den Aufbau eines erfindungsgemäßen Universalsensors.
Figur 2 zeigt schematisch die Speicheraufteilung eines internen Speichers und eines zusätzlichen Speichers im erfindungsgemäßen Reifendrucksensor.

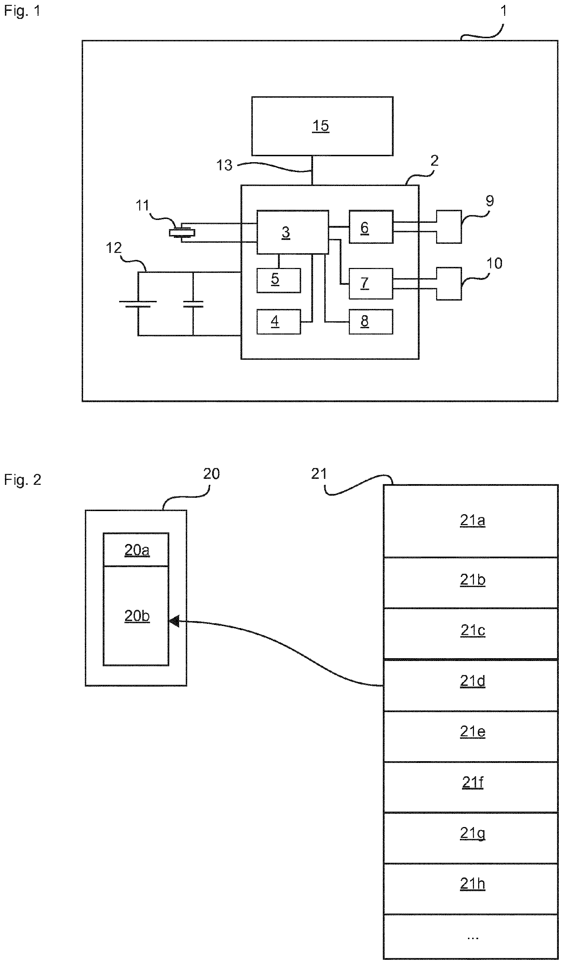

In Figur 1 ist ein Sensor in schematischer Darstellung gezeigt. Ein Gehäuse 1 umfasst sämtliche Komponenten des Sensors. In das Gehäuse 1 kann sich bei bestimmten Ausbildungsformen beispielsweise ein Ventilschaft eines Reifendruckventils erstrecken oder es kann mit dem Gehäuse 1 gekoppelt sein. Bei anderen Sensoren ist das Gehäuse 1 unabhängig von dem Ventilschaft im Reifen an anderer Stelle angeordnet, z.B. in der Lauffläche.

In dem Gehäuse 1 ist ein Sensor-IC 2 angeordnet. Der Sensor-IC enthält eine integrierte Schaltung mit einem Mikrocontroller 3. Als Sensoren sind im Sensor-IC 2 in diesem Ausführungsbeispiel ein Drucksensor 4, ein Temperatursensor 5 und ein Beschleunigungssensor 8 vorgesehen. Eine in der Sensor-IC 2 integrierte Hochfrequenz(HF)-Sendeeinheit 6 ist mit einer separat ausgebildeten HF-Antenne 9 gekoppelt. Eine auf der Sensor-IC 2 angeordnete niederfrequente (LF) Empfangseinheit 7 ist mit einer separat ausgebildeten LF-Spule 10 gekoppelt.

Der Sensor-IC 2 wird durch eine Energiequelle (z.B. Batteriespeicher mit Speicherkondensator oder einen Piezogenerator) vorsorgt, die insgesamt als Energieversorgung 12 bezeichnet wird. Ein Schwingquarz 11 ist als Taktgeber für die HF-Kommunikation ausgebildet. In anderen Ausführungsbeispielen können weniger oder mehr Sensoreinrichtungen ausgebildet sein. Auch der Schwingquarz 11 kann auf der Sensor-IC integriert sein. Schließlich ist es auch nicht zwingend erforderlich, Sende- und Empfangseinheiten für unterschiedliche Frequenzbereiche auszubilden, wenn als Kommunikationsprotokoll ein einheitliches Protokoll sowohl für den Empfang als auch die Aussendung von Informationen verwendet wird. Dafür können beispielsweise auch andere hochfrequente Protokolle, z.B. Bluetooth-Kommunikation in Frage kommen.

In dem gezeigten Ausführungsbeispiel ist ein Zusatzspeicher 15 separat von der Sensor-IC 2 ausgebildet. Der Zusatzspeicher 15 ist mit der Sensor-IC 2 über eine einzelne Datenleitung 13 verbunden, so dass eine serielle Datenkommunikation zwischen der Sensor-IC 2, insbesondere dem Mikrocontroller 3 und dem Zusatzspeicher 15 möglich ist. Zusätzlich zu der Datenleitung 13 können Versorgungsleitungen (Spannung) und Wake-up Leitungen zu dem Zusatzspeicher führen (nicht gezeigt).

Der Sensor-IC 2 selbst verfügt über einen internen Speicher, der deutlich kleiner ist als der Zusatzspeicher 15. Im Ausführungsbeispiel ist der Sensor-IC 2 beispielsweise mit einem 8kB großen internen, dauerhaften Speicher versehen, der im dargestellten Beispiel mit dem Mikrocontroller 3 zusammengefasst ist.

Der interne Speicher der Sensor-IC 2 verfügt über eine Basisfunktionalität in Gestalt gespeicherter Anweisungen, im Weiteren als sogenannter Bootloader bezeichnet. Der Bootloader koordiniert anfänglich die Kommunikation des Sensors mit der Außenwelt. Im gezeigten Beispiel ist ein LF-Empfang über die LF-Spule 10 und die LF-Empfangseinheit 7 unter Steuerung des Bootloaders im Mikrocontroller 3 möglich. Es wird mittels eines externen Steuergeräts (RDKS-Diagnosegerät, nicht gezeigt) eine Datensatzkennung über die LF-Schnittstelle an den Mikrocontroller übermittelt und der Mikrocontroller 3 greift über die serielle Verbindung 13 auf den Zusatzspeicher 15 zu und ruft gemäß der übermittelten Kennung einen Speicherbereich ab. Der entsprechende Speicherbereich wird dann unter Kontrolle des Bootloaders von dem Zusatzspeicher 15 über die serielle Verbindung 13 in den internen Speicher der Sensor-IC 2 umkopiert und dort dauerhaft gespeichert. Nach erfolgreichem Kopiervorgang weist dann der Sensor-IC 2 im internen Speicher sowohl den Bootloader als auch eine ausführbare Applikation auf, die den dauerhaften Betrieb des Sensors 1 gemäß der programmierten Konfiguration zulässt.

Figur 2 verdeutlicht den Vorgang und die Speicheraufteilung in schematischer Weise. Die Aufteilung des internen Speichers der Sensor-IC 2 ist mit dem Bezugszeichen 20 versehen. Die Aufteilung 21 des Zusatzspeichers gibt das Schema des physisch in dem Speicherbaustein 15 aus Figur 1 aufgenommenen Speicher wieder.

Der interne Speicher 20 verfügt über einen Speicherabschnitt 20a, in dem dauerhaft der Bootloader und die Basisfunktionen der Sensor-IC 2 gespeichert sind. Ein Abschnitt 20b ist für die Aufnahme der verschiedenen Konfigurationen von Parametern und Applikationen aus dem Zusatzspeicher 21 vorgesehen und wird für die Abarbeitung des Normalbetriebs nach erfolgreicher Konfiguration aufgerufen.

Der Zusatzspeicher 21 verfügt in einem adressierbaren Speicherbereich 21a, in welchem gemäß diesem Ausführungsbeispiel ein Konfigurationsverzeichnis 21a abgespeichert ist. Dieses Konfigurationsverzeichnis adressiert Speicherbereiche 21b,..., 21h in Zuordnung zu verschiedenen Kennungen. Beispielsweise kann gemäß dem gespeicherten Konfigurationsverzeichnis einer Kennung #1 der Speicherbereich von den Speicheradressen 500 - 8000 zugeordnet sein. Einem Speicherbereich #2 sind die Adressbereiche 8000 - 14500 zugeordnet, einem Speicherbereich #3 die Speicheradressen 14500 - 21500 usw. Diese entsprechenden Speicherabschnitte sind in der Figur 2 schematisch durch die Abschnitte 21b, 21c,..., 21h dargestellt. Selbstverständlich können auch mehr oder weniger Speicherbereiche realisiert werden.

Jeder der adressierbaren Speicherbereiche enthält Daten, die für die Konfiguration des Sensors zwecks Anpassung auf eine Fahrzeuggruppe erforderlich sind. Es sind beispielsweise Parameter gespeichert, welche das Format eines vom Sensor an das Fahrzeug zu sendende Datentelegramm definieren. Es können auch vollständige und angepasste Programmcodes hinterlegt sein.

Bei Abarbeitung der Anweisungen des Bootloaders im Speicherbereich 20a wird übermittelt, welche Konfiguration aus dem Zusatzspeicher 21 abzurufen ist. Diese Konfigurationskennung wurde von außen, z.B. mit einem LF-Kommunikationsgerät übermittelt. Anschließend wird zwischen der Sensor-IC 2 und dem Zusatzspeicher 15 eine serielle Kommunikation aufgebaut und es wird in Speicherabschnitt 21a der Adressbereich nachgeschlagen, welcher das der Konfigurationskennung entsprechende Datenpaket enthält. In dem gezeigten Beispiel ist dies der Speicherbereich 21d. Der Inhalt dieses Speicherbereichs wird anschließend über die serielle Schnittstelle in den Speicherbereich 20b umkopiert.

Es braucht dabei nicht unbedingt der gesamte Speicherbereich 20b überschrieben zu werden. Je nachdem, welche Funktionen und Daten im internen Speicher bereits vorhanden sind, ist es auch möglich, lediglich spezifische Parameter oder Programmabschnitte für eine individuelle Konfiguration umzukopieren.

Nach erfolgreichem Umkopieren enthält der Speicherbereich 20b dauerhaft die gewünschte, auf die zukünftige Anwendung konfigurierte Applikation. Im normalen Betriebsmodus kann dann sowohl die Erfassung der Sensorwerte, insbesondere der Reifendruckwerte über den Reifendrucksensor 4 gemäß der Konfiguration erfolgen, als auch die Übermittlung der erfassten Daten gemäß der auf das Fahrzeug angepassten Konfigurationsdaten. Es ist also durchaus möglich, dass der eigentliche Erfassungsvorgang gemäß umkopierter Konfiguration erfolgt. Zum Beispiel kann der Sensor die Fähigkeit zur Erfassung der Beschleunigung hardwareseitig mitbringen, die Messung der Beschleunigung wird aber nur bei einigen der Konfigurationen erfasst. Der Sensor kann alternativ auch sämtliche Daten erfassen, die Übertragung der Daten jedoch in Abhängigkeit von der Konfiguration anpassen, z.B. nur einen Teil der Daten übertragen. In jedem Fall ist die Art der Übertragung, also z.B. die Struktur des Datentelegramms zur Übermittlung der Daten an das Fahrzeug anpassbar.

Der Zusatzspeicher 15 wird in diesem Beispiel nach erfolgreicher Kommunikation deaktiviert. In diesem Beispiel bedeutet dies, dass der Zusatzspeicher 15 im Normalbetrieb nicht mehr angesteuert wird, die serielle Schnittstelle 13 also nicht mehr genutzt wird. Eine Spannungsversorgung des Zusatzspeichers 15 kann in diesem Ausführungsbeispiel dann außerdem gänzlich abgeschaltet werden, um den Stromverbrauch weiter zu reduzieren.

## Patentansprüche

1. Reifendrucksensor für Kraftfahrzeuge, aufweisend:
ein Gehäuse (1),
eine in dem Gehäuse (1) aufgenommene integrierte Schaltung (Sensor-IC) (2), wobei die Sensor-IC einen Mikrocontroller (3) und einen Drucksensor (4) aufweist,
wobei in dem Gehäuse (1) Mittel (6, 9; 7, 10) zur drahtlosen Kommunikation angeordnet sind, welche mit dem Mikrocontroller (3) gekoppelt sind, um mittels des Drucksensors (4) erfasste Druckmesswerte an eine entfernte Empfangseinrichtung zu übermitteln,
wobei die Sensor-IC (2) einen internen dauerhaften Speicher aufweist, in welchem ausführbare Anweisungen und Daten speicherbar sind, welche bei Ausführung die Erfassung und Übermittlung von Druckmessdaten bewirken,
wobei eine Spannungsversorgung (12) in dem Gehäuse (1) angeordnet und mit der Sensor-IC (2) gekoppelt ist, **dadurch gekennzeichnet,**
**dass** die Sensor-IC (2) mit einem im Gehäuse (1) angeordneten zusätzlichen Speicherbaustein (15) gekoppelt ist, wobei in dem Speicherbaustein eine Mehrzahl von unterschiedlichen Datenpaketen mit jeweiligen Anweisungen oder Daten gespeichert sind, wobei der zusätzliche Speicherbaustein über eine serielle Datenschnittstelle mit dem Mikrocontroller der Sensor-IC gekoppelt ist,wobei der zusätzliche Speicherbaustein (15) Informationen zur Datenerfassung und Übermittlung gemäß Spezifikation unterschiedlicher Fahrzeughersteller speichert und durch den Mikrocontroller (3) ansteuerbar ist, um ein ausgewähltes Datenpaket in den internen Speicher zu kopieren, wobei der Mikrocontroller derart mit den Mitteln zur drahtlosen Kommunikation gekoppelt ist, dass eine Selektion eines im zusätzlichen Speicher gespeicherten Datenpakets über die Mittel zur drahtlosen Kommunikation erfolgt und der Mikrokontroller anschließend das selektierte Datenpaket aus dem zusätzlichen Speicher in den internen Speicher des Mikrocontrollers kopiert.

2. Reifendrucksensor nach Anspruch 1, wobei zwischen Sensor-IC und zusätzlichem Speicherbaustein eine einzige, einadrige Datenleitung ausgebildet ist.

3. Reifendrucksensor nach einem der vorangehenden Ansprüche, wobei der Mikrocontroller (3) die Spannungsversorgung des zusätzlichen Speicherbausteins (15) derart kontrolliert, dass der zusätzliche Speicher in einen energiesparenden Modus schaltbar ist.

4. Reifendrucksensor nach Anspruch 3, wobei der Mikrocontroller dann in den energiesparenden Modus des zusätzlichen Speichers schaltet, nachdem ein ausgewähltes Datenpaket von dem zusätzlichen Speicher in den internen Speicher kopiert wurde.

5. Reifendrucksensor nach einem der Ansprüche 1 bis 4, wobei die Mittel zu drahtlosen Kommunikation Sendemittel für hochfrequente Signale aufweisen und Empfangsmittel für eine niederfrequente Signale.

6. Reifendrucksensor nach einem der vorangehenden Ansprüche, wobei der zusätzliche Speicherbaustein zusammen mit dem Sensor-IC auf einer Platine angeordnet ist und beabstandet vom Sensor-IC auf der Platine platziert ist.

7. Verfahren zum Betreiben eines Reifendrucksensors für Kraftfahrzeuge nach einem der Ansprüche 1 bis 6, aufweisend die Schritte:
- drahtloses Übertragen einer Auswahlkennung mittels eines Übertragungsgerätes an den Reifendrucksensor;
- Betreiben eines in dem Reifendrucksensor angeordneten Zusatzspeichers mit Hilfe einer im Reifendrucksensor angeordneten Sensor-IC und Anfordern und Kopieren eines der Auswahlkennung entsprechenden Speicherbereichs aus dem Zusatzspeicher in einen dauerhaften, kleineren Speicher einer Sensor-IC über eine serielle Schnittstelle zwischen Sensor-IC und zusätzlichem Speicher.

8. Verfahren nach Anspruch 7, außerdem aufweisend:
- Deaktivieren des Zusatzspeichers nach erfolgtem Kopiervorgang, wobei der Zusatzspeicher von einer Energieversorgung getrennt wird oder die Energieversorgung des Zusatzspeichers reduziert wird.

9. Verfahren nach Anspruch 7, wobei die Auswahlkennung über eine LF-Signalverbindung an eine LF-Empfangseinrichtung im Reifendrucksensor übertragen wird.

## Claims

1. A tire pressure sensor for motor vehicles, comprising:
a housing (1),
an integrated circuit (sensor IC) (2) accommodated in the housing (1), wherein the sensor IC comprises a microcontroller (3) and a pressure sensor (4),
wherein means (6, 9; 7, 10) for wireless communication are arranged in the housing (1), which are coupled to the microcontroller (3) for transmitting pressure measurement values acquired by means of the pressure sensor (4) to a remote receiver device,
wherein the sensor IC (2) has an internal permanent memory in which executable instructions and data can be stored, which, when executed, effect the acquisition and transmission of pressure measurement data,
wherein a power supply (12) is arranged in the housing (1) and coupled to the sensor IC (2),
**characterized in that**,
**in that** the sensor IC (2) is coupled to an additional memory module (15) arranged in the housing (1), wherein a plurality of different data packets including respective instructions or data are stored in the memory module, wherein the additional memory module is coupled to the microcontroller of the sensor IC via a serial data interface, wherein the additional memory module (15) stores information for data acquisition and transmission according to the specification of different vehicle manufacturers and can be activated by the microcontroller (3) so as to copy a selected data packet into the internal memory, wherein the microcontroller is coupled to the means for wireless communication in such a manner that a selection of data packet stored in the additional memory is carried out via the means for wireless communication and the microcontroller subsequently copies the selected data packet from the additional memory into the internal memory of the microcontroller.

2. The tire pressure sensor according to claim 1, wherein a single single-core data line is formed between the sensor IC and the additional memory module.

3. The tire sensor according to any one of the preceding claims, wherein the microcontroller (3) controls the power supply for the additional memory module (15) such that the additional memory can be switched over to an energy-saving mode.

4. The tire pressure sensor according to claim 3, wherein the microcontroller then switches over to the energy-saving mode of the additional memory after a selected data packet has been copied from the additional memory into the internal memory.

5. The tire pressure sensor according to any one of claims 1 to 4, wherein the means for wireless communication comprise transmitting means for high-frequency signals and receiving means for low-frequency signals.

6. The tire pressure sensor according to any one of the preceding claims, wherein the additional memory module is arranged, together with the sensor IC, on a circuit board and is placed on the circuit board at a spacing to the sensor IC.

7. A method for operating a tire pressure sensor for motor vehicles according to any one of claims 1 to 6, comprising the steps of:
- wirelessly transmitting a selection identifier to the tire pressure sensor by means of a transmission device;
- operating an auxiliary memory arranged in the tire pressure sensor with the aid of a sensor IC arranged in the tire pressure sensor and requesting and copying a memory area corresponding to the selection identifier from the auxiliary memory into a permanent smaller memory of a sensor IC via a serial interface between the sensor IC and the additional memory.

8. The method according to claim 7, further comprising:
- deactivating the auxiliary memory after the copying process has been completed, wherein the auxiliary memory is disconnected from a power supply or the power supply for the auxiliary memory is reduced.

9. The method according to claim 7, wherein the selection identifier is transmitted to an LF receiver device in the tire pressure sensor via an LF signal connection.

## Revendications

1. Capteur de pression de pneus pour véhicules automobiles, présentant :
un boîtier (1),
un circuit (CI de capteur) (2) intégré reçu dans le boîtier (1), le CI de capteur présentant un microcontrôleur (3) et un capteur de pression (4),
étant disposés dans le boîtier (1), pour la communication sans fil, des moyens (6, 9 ; 7, 10) qui sont couplés au microcontrôleur (3) afin de transmettre des valeurs de mesure de pression enregistrées au moyen du capteur de pression (4) à un dispositif de réception distant,
le CI de capteur (2) présentant une mémoire interne permanente dans laquelle peuvent être sauvegardées des instructions et des données exécutables qui, en cas d'exécution, provoquent l'enregistrement et la transmission de données de mesure de pression,
une alimentation en tension (12) étant disposée dans le boîtier (1) et couplée à le CI de capteur (2),
**caractérisé en ce que** le CI de capteur (2) est couplé à un module de mémoire complémentaire (15) disposé dans le boîtier (1), une pluralité de paquets de données différents comportant des instructions ou des données respectives étant enregistrés dans le module de mémoire, le module de mémoire complémentaire étant couplé par une interface de données sérielle au microcontrôleur de le CI de capteur (2), le module de mémoire complémentaire (15) sauvegardant des informations d'enregistrement de données et de transmission conformément à la spécification de différents constructeurs automobiles et pouvant être commandé par le microcontrôleur (3) pour copier un paquet de données sélectionné dans la mémoire interne, le microcontrôleur étant couplé au moyen de communication sans fil de manière à ce qu'une sélection d'un paquet de données sauvegardées par la mémoire complémentaire ait lieu par l'intermédiaire des moyens de communication sans fil et que le microcontrôleur copie ensuite le paquet de données sélectionné se trouvant dans la mémoire complémentaire dans la mémoire interne du microcontrôleur.

2. Capteur de pression de pneus selon la revendication 1, dans lequel, entre le CI de capteur et le module de mémoire complémentaire, un seul câble de transmission de données à un fil est constitué.

3. Capteur de pression de pneus selon une des revendications précédentes, dans lequel le microcontrôleur (3) contrôle l'alimentation en tension du module de mémoire complémentaire (15) de manière à ce que la mémoire complémentaire soit commutable dans un mode économisant l'énergie.

4. Capteur de pression de pneus selon la revendication 3, dans lequel le microcontrôleur passe en mode économisant l'énergie de la mémoire complémentaire après qu'un paquet de données sélectionné a été copié par la mémoire complémentaire vers la mémoire interne.

5. Capteur de pression de pneus selon une des revendications 1 à 4, dans lequel les moyens de communication sans fil présentent des moyens d'envoi pour des signaux à haute fréquence et des moyens de réception pour des signaux à basse fréquence.

6. Capteur de pression de pneus selon une des revendications précédentes, dans lequel le module de mémoire complémentaire est disposé avec le CI de capteur sur une platine et est positionné sur la platine à distance de le CI de capteur.

7. Procédés d'utilisation d'un capteur de pression de pneus pour véhicules automobiles selon une des revendications 1 à 6, présentant les étapes suivantes :
- transmission sans fil d'un identifiant de sélection au moyen d'un appareil de transmission au capteur de pression de pneus ;
- utilisation d'une mémoire complémentaire disposée dans le capteur de pression de pneus à l'aide d'un CI de capteur disposé dans le capteur de pression de pneus et demande et copie d'une plage de mémoire correspondant à l'identifiant de sélection se trouvant dans la mémoire complémentaire vers une mémoire permanente plus restreinte d'un CI de capteur par l'intermédiaire d'une interface sérielle entre le CI de capteur et la mémoire complémentaire.

8. Procédé selon la revendication 7, présentant en outre :
- la désactivation de la mémoire complémentaire une fois que l'opération de copie est terminée, la mémoire complémentaire étant séparée d'une alimentation électrique ou l'alimentation électrique de la mémoire complémentaire étant réduite.

9. Procédé selon la revendication 7, dans lequel l'identifiant de sélection est transmis par une liaison de signaux LF à un dispositif de réception LF dans le capteur de pression de pneus.
